# NEUE EUROPÄISCHE PATENTSCHRIFT

(11) **EP 0 175 192 B2**
(45) Veröffentlichungstag und Bekanntmachung des Hinweises auf die Entscheidung über den Einspruch: **01.06.1994**
(45) Hinweis auf die Patenterteilung: 08.03.1989
(21) Anmeldenummer: 85110959.5
(22) Anmeldetag: 30.08.1985
(51) Int. Cl.: B60K 17/10, F16H 47/02

(54) **Antriebseinheit für einen Fahrantrieb, bestehend aus einem verstellbaren hydrostatischen Getriebe und einem diesem nachgeordneten Schaltgetriebe**
Drive unit for vehicle propulsion consisting of a variable hydrostatic transmission followed by a gearbox
Unité d'entraînement pour un dispositif de propulsion se composant d'une transmission hydrostatique réglable et d'une boîte de vitesses placée à la suite de celle-ci

(30) Priorität: 12.09.1984 DE 3433495
(43) Veröffentlichungstag der Anmeldung: 26.03.1986
(73) Patentinhaber: Hydromatik GmbH, 89275 Elchingen (DE)
(72) Erfinder: Müller, Heinz, D-7915 Elchningen 2 (DE); Wachs, Ewald, D-7901 Illerkirchberg (DE)
(74) Vertreter: Körber, Wolfhart, Dr.rer.nat.

(56) Entgegenhaltungen:
- WO-A-84/01419
- DE-A- 1 580 249
- DE-A- 2 307 550
- DE-A- 2 652 976
- DE-A- 2 933 527
- DE-B- 2 237 595
- GB-A- 1 525 801
- GB-A- 1 590 981

## Beschreibung

Die Erfindung bezieht sich auf eine Antriebsvorrichtung z.B. für den Fahrantrieb bei Radladern, die aus einem Antriebsmotor, z. B. Verbrennungsmotor und einem von diesem angetriebenen hydrostatischen Getriebe besteht, dem zur Vergrößerung des Geschwindigkeitsbereichs ein Schaltgetriebe nachgeordnet ist. Bei einer bekannten Bauart ist das hydrostatische Getriebe in Abhängigkeit von der Drehzahl des Antriebsmotors leistungsgeregelt, um eine günstige Übertragung der Antriebskraft zu gewährleisten. Hierzu dient eine Verstellvorrichtung fur das hydrostatische Getriebe, wie sie im deutschen Patent 2 247 437 beschrieben und dargestellt ist. Eine willkürliche Verstellung des hydrostatischen Getriebes, d. h., eine willkürliche Verstellung seiner Ausgangsdrehzahl ist bei der bekannten Bauart unabhängig von der Drehzahl des Antriebsmotors nicht möglich.

Infolgedessen bedarf es bei der bekannten Bauart einer Änderung der Antriebsmotordrehzahl, um das hydrostatische Getriebe an die durch die Schaltstufe bedingte Drehzahländerung anzupassen. Eine solche Drehzahlanpassung ist nicht nur deshalb nachteilig, weil sie eine hohe Aufmerksamkeit und Einfühlungsvermögen von der Bedienungsperson erfordert, sondern weil sie auch zu einem hohen Kraftstoffverbrauch und vorzeitigem Verschleiß führt.

Darüberhinaus ergeben sich insbesondere bei verhältnismäßig großer Lastübertragung wie es bei Baufahrzeugen z. B. Radladern, der Fall ist, Kupplungs- und Schaltschwierigkeiten, die durch die vorhandenen Schwungmassen bei gleichzeitiger verhältnismäßig großer Lastübertragung hervorgerufen werden. Das Getriebe derAntriebseinheit in der bekannten Bauart läßt sich deshalb praktisch nur bei Stillstand schalten.

Die bekannte Bauart ist insbesondere dann unzureichend, wenn die vorhandene Antriebsmaschine mehrere Antriebsfunktionen gleichzeitig erfüllt, was bei Baufahrzeugen meistens gegeben ist. In einem solcher Fall ist durch zusätzliche Bauteile und Vorrichtungen dafür zu sorgen, daß die von derAntriebsmaschine aufgrund höherer Drehzahlen (beim Herunterschalten) erbrachte Leistung den weiteren Verbrauchern nicht übertragen wird, weil diese sie beispielsweise nicht ausnutzen können. Andererseits würde durch eine Herabsetzung derAntriebsmaschinendrehzahl (beim Hochschalten) die Antriebsleistung auch für die anderen gleichzeitig angetriebenen Aggregate verringert werden, wodurch der Antrieb der anderen Aggregate beeinträchtigt werden würde.

Um diese Nachteile zu vermeiden, ist in der DE-A-23 07 550 vorgeschlagen worden, durch Einwirken auf die Verstelleinrichtung des hydrostatischen Getriebes bei einem eingeleiteten Schaltvorgang eine Drehzahlanpassung der Kupplungsteile des Schaltgetriebes durch Anpassung der Ausgangsdrehzahl des hydrostatischen Getriebes vorzunehmen. Bei dieser bekannten Bauart, von der im Oberbegriff des Anspruchs 1 ausgegangen wird, ist eine von der Drehzahl des Antriebsmotors abhängige Leistungsregelung vorgesehen und die Verstelleinrichtung für die Anpassung der Ausgangsdrehzahl des hydrostatischen Getriebes umfaßt ein Wegeventil zur Beaufschlagung von Stellkolben in der Verstelleinrichtung des hydrostatischen Getriebes. Dazu ist eine besondere Ausgestaltung des Schaltgetriebes mit Drehzahlgebern jeweils an der Eingangs- und Ausgangsseite der Schaltstufen zurAnsteuerung entsprechender Schaltventile erforderlich, die den Stellkolben über das Wegeventil beaufschlagen.

Der Erfindung liegt die Aufgabe zugrunde, eine Getriebeeinheit der gattungsgemäßen Bauart so weiterzubilden, daß ohne besondere Ausgestaltung des Schaltgetriebes die Regeleinrichtung in die Verstellvorrichtung des hydrostatischen Getriebes integriert ist.

Diese Aufgabe wird durch die im Anspruch 1 enthaltenen Merkmale gelöst. Die erfindungsgemäße Ausgestaltung ermöglicht beim Einsatz sowohl eines einfachen Schaltgetriebes als auch eines unter Last schalt baren Getriebes einen einfachen Gangwechsel während des Betriebs des Antriebsmotors, ohne daß es einer Änderung bzw. Anpassung der Antriebsmotorendrehzahl an die durch die Schaltstufe bedingte Drehzahländerung des Schaltgetriebes bedarf und unter Beibehaltung der Leistungsregelung. Die Anpassung der durch das Schalten bedingten Drehzahländerung erfolgt innerhalb der Verstelleinrichtung des hydrostatischen Getriebes durch Ausbildung des dortfürdie Einstellung der Stellrichtung vorhandenen Wegeventiles als proportionales Regelventil.

Beim Einsatz eines einfachen Schaltgetriebes werden mittels der Regeleinrichtung die beiden miteinander zu verbindenden Getriebeteile (Kupplung) auf eine gleiche Drehzahl gebracht.

Da bei der erfindungsgemäßen Ausgestaltung die jeweilige Leistung der Antriebsmaschine aufgrund unabhängiger Antriebsmaschinendrehzahlen beim Schalten im wesentlichen unverändert bleibt, eignet sich die erfindungsgemäße Ausgestaltung insbesondere für solche Anordnungen, bei denen die Antriebsmaschine mehrere Antriebsfunktionen gleichzeitig erfüllt. Durch die erfindungsgemäße Ausgestaltung werden die eingangs beschriebenen Nachteile (Kraftstoffverbrauch, Antriebsmaschinenleistungsveränderung) vermieden und der leistungsgerechte Betrieb der weiteren von der Antriebsmaschine gleichzeitig angetriebenen Aggregate gewährleistet.

Die erfindungsgemäße Ausgestaltung stellt sich somit als ein zusätzliches Regulativ dar, das vorteilhaft in die Verstellvorrichtung fur das hydrostatische Getriebe integriert werden kann, oder so angeordnet werden kann, daß es auf die Verstellvorrichtung wirkt. In beiden Fällen können Bauteile eingespart werden, weil die Regeleinrichtung auf vorhandene Stellgliederwirkt und somit zusätzliche bzw. doppelte Stellglieder eingespart werden können. Dabei ist von einer drehzahlabhängigen Leistungsregelvorrichtung für das hydrostatische Getriebe auszugehen, die eine Veränderung der Ausgangsdrehzahl des hydrostatischen Getriebes ermöglicht.

Die lösbare Kupplung ist zwischen dem hydrostatischen Getriebe und dem Schaltgetriebe angeordnet.

Die erfindungsgemäße Ausgestaltung bzw. Anordnung ermöglicht ein einfaches und ruckfreies Schalten auch beim Einsatz einer starr wirksamen Kupplung, z. B. einer Klauenkupplung, mit der insbesondere größere Antriebskräfte sicher übertragen werden können, wie es bei Antrieben für Baufahrzeuge oder vergleichbare Fahrzeuge und Maschinen gefordert ist.

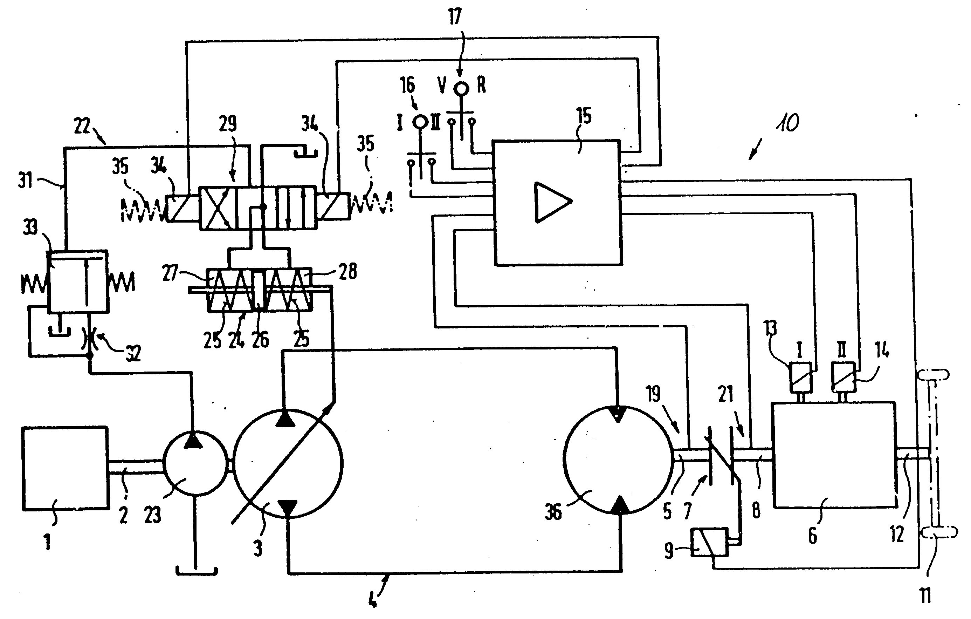

Nachfolgend wird ein Ausführungsbeispiel der Erfindung anhand einer vereinfachten Zeichnung näher beschrieben. Die Zeichnung zeigt einen hydraulischen Schaltplan für den Fahrantrieb eines Radladers. Eine im Schaltplan dargestellte Getriebeeinheit umfaßt einen Verbrennungsmotor als Antriebsmotor 1, dessen Antriebswelle 2 die Pumpe 3 eines hydrostatischen Getriebes 4 mit geschlossenem Kreislauf antreibt. Zwischen der Ausgangswelle 5 des hydrostatischen Getriebes 4 und einem diesem nachgeordneten zweigängigen Schaltgetriebe 6 ist eine allgemein mit 7 bezeichnete lösbare Kupplung angeordnet, mit der die Ausgangswelle 5 und die Eingangswelle 8 das Schaltgetriebes 6 durch einen Elektromagneten 9 miteinander verbindbar oder lösbar sind. Bei der Kupplung 7 handelt es sich um eine solche, die im Sinne einer Klauen- bzw. Bolzenkupplung starr ist. Die antriebsmäßig mit den andeutungsweise dargestellten Rädern 11 verbundene Ausgangswelle des Schaltgetriebes 6 ist mit 12 bezeichnet.

Einzelheiten des Schaltgetriebes 6 sind nicht dargestellt. Es sind lediglich zwei Schaltantriebe 13, 14 sichtbar.

Der Betrieb der Getriebeeinheit wird durch eine Regeleinrichtung (10) mit einer elektronischun Steuereinrichtung 15 geregelt, die durch elektrische Leitungen mit einem Schalter 16 für den ersten oder zweiten Gang des Schaltgetriebes, mit einem Schalter 17 für Vorwärts- und Rückwärtsfahrt, mit den Schaltantrieben 13, 14, mit dem Elektromagneten 9, mit zwei der Ausgangswelle 5 des hydrostatischen Getriebes 4 und der Eingangswelle 8 des Schaltgetriebes 6 zugeordneten Drehzahlmessern 19, 21 und in noch zu beschreibender Weise mit einer allgemein mit 22 bezeichneten Verstellvorrichtung für das hydrostatische Getriebe 4 verbunden ist.

Das hydrostatische Getriebe 4 ist durch die Versteilvorrichtung 22 in Abhängigkeit von der Drehzahl des Antriebsmotors 1 leistungsgeregelt. Die Verstellvorrichtung 22 umfaßt eine durch die Antriebswelle 2 des Antriebsmotors 1 angetriebene Hilfspumpe 23 unveränderlichen Schluckvolumens, die für den Betrieb in eine Förderrichtung eingerichtet ist. Die Pumpe 3 veränderlichen Schluckvolumens, die für den Betrieb in beide Förderrichtungen eingerichtet ist, wird durch einen Hydraulikzylinder 24 verstellt, dessen durch Federn 25 mittelzentrierter Doppelkolben 26 durch wahlweise Beaufschlagung der Arbeitsräume 27, 28 verstellbar ist. Hierzu dient ein Wegeventil 29, das jeweils durch Vorwahl der Vorwärts- oder Rückwärtsfahrt am Schalter 17 den einen oder anderen Arbeitsraum 27, 28 mit einer Hydraulikleitung 31 verbindet, in die die Hilfspumpe 23 fördert. In der Hydraulikleitung 31 ist eine sogenannte Druckwaage angeordnet, bestehend aus einer Drossel 32 in der Hydraulikleitung 31, und einem dieser in Strömungsrichtung nachgeordneten Druckregelventil 33, das durch den Arbeitsdruck in der Hydraulikleitung 31 vor der Drossel 32 verstellbar ist.

Bei den Schaltmagneten 31 für das Wegeventil 29 kann es sich um Proportionalmagnete handeln, was durch strichpunktiort angedeutete Federn 35 dargestellt ist, gegen die die Schaltmagnete 34 wirksam sind.

Im folgenden wird die Funktion der Getriebeeinheit erklärt:

Vor- oder Rückwärtsfahrt wird durch Vorwahl am Schalter 17 vorgewählt. Die Schaltung des Schaltgetriebes 6 wird durch Vorwahl des beabsichtigten Ganges eingeleitet. Die beiden Gänge sind mit 1 und II bezeichnet. Wird z. B. bei Fahrt des Radladers im ersten Gang der zweite Gang vorgewählt, dann wird das Wegeventil 29 in die dargestellte Null-Stellung geschaltet, was eine automatische Verstellung der Pumpe 3 in Richtung auf 0 bewirkt. Hierdurch wird die Kupplung 7 entlastet, was gegebenenfalls zusätzlich durch einen nicht dargestellten Druckvergleich vor und hinter dem Hydromotor 36 ermittelt werden kann. Ein solcher Druckschalterwäre ebenfalls mit der elektronischen Steuereinrichtung 15 zu verbinden. Anschließend erfolgt ein ruckfreies Entkuppeln der Kupplung 7, weil die Kupplung 7 entlastet ist. Nach dem Entkuppeln erfolgt die automatische Schaltung des Schaltgetriebes 6 in den zweiten Gang. Nunmehr werden mit Hilfe der Drehzahlmesser 19,21 die Drehzahlen der Ausgangswelle 5 und der Eingangswelle 8 miteinander verglichen. Je nach Fahrbetrieb kann das automatische weitere Zurückschwenken der Pumpe 3 in Richtung auf 0 dazu beitragen, daß sich eine gleiche Drehzahl an der Ausgangswelle 5 und der Eingangswelle 8 einstellt. Ist nach dem Schaltvorgang die Drehzahl der Eingangswelle 8 größer als die der Ausgangswelle 5, denn wird die Pumpe 3 durch eine entsprechende Verstellung des Wegeventils 29 mittels der Regeleinrichtung 10 ausgeschwenkt, was eine Drehzahlerhöhung an der Ausgangswelle 5 bewirkt. Sobald Drehzahlgleichheit an der Ausgangswelle 5 und an der Eingangswelle 8 vorliegt, wird automatisch gekuppelt und dann das Wegeventil 29 wieder zurückgestellt.

Das Herunterschalten vom zweiten in den ersten Gang erfolgt in vergleichbarer Weise. Auch hier wird die Kupplung 7 in entlastetem Zustand gelöst, dann automatisch geschaltet und anschließend die Drehzahl der Ausgangswelle 5 durch von der Regeleinrichtung 10 gesteuertes Ausschwenken der Pumpo 3 an die Drehzahl der Eingangswelle 8 angepaßt. Sobald Drehzahlgleichheit vorliegt, wird die Kupplung 7 geschlossen.

Das jeweilige Anpassen der Ausgangsdrehzahl des hydrostatischen Getriebes 4 an die jeweilige Drehzahl der Eingangswelle 8 erfolgt durch einfaches, als auch durch proportionales Verstellen des Wegeventils 29 durch die Regeleinrichtung 10 Von wesentlicher Bedeutung ist, daß mit Hilfe der Regeleinrichttung 10 zum Schaltzeitpunkt, bzw. unmittelbar danach die vorbeschriebene Drehzahlgleichheit durch entsprechende Regelung des hydrostatischen Getriebes erreicht wird. Vor der Vorwahl des jeweiligen Ganges I, II und nach der Schließen der Kupplung 7 besteht kein Einfluß der Regeleinrichtung 10 auf die Verstellvorrichtung 22. Infolgedessen unterliegt die Verstellvorrichtung 22 nur zum Schaltzeitpunkt, d. h., bei Einleitung und Durchführung der Schaltung, dem Einfluß der Regeleinrichtung 10. Unabhängig von dem vorbeschriebenen Funktionsabschnitt bleibt das hydrostatische Getriebe 4 durch die Verstellvorrichtung 22 in Abhängigkeit von der Drehzahl des Antriebsmotors 1 leistungsgeregelt.

Die Erfindung ist nicht auf das vorbeschriebene Ausführungsbeispiel beschränkt. Im Rahmen der Erfindung ist es möglich, primär- und/odersekundärgeregelte hydrostatische Getriebe einzusetzen.

Der Antriebsmotor 1 treibt gleichzeitig weitere Aggregate des Radladers an, z. B. die Hub- und Schwenkeinrichtung für die Ladeschaufel. Dies ist aus Vereinfachungsgründen nicht beschrieben und dargestellt.

## Patentansprüche

1. Fahr-Antriebsvorrichtung für Maschinen und Fahrzeuge, insbesondere solchen mit gleichzeitig anzutreibenden Aggregaten, bevorzugt für Baufahrzeuge, wie Radlader, bestehend aus
a) einem Antriebsmotor (1) und einer von diesem antreibbaren Getriebeeinheit (4, 6) mit einem verstellbaren, eine Pumpe (3) und einen Hydromotor aufweisenden hydrostatischen Getriebe (4) und einem diesem nachgeordneten Schaltgetriebe (6);
b) wobei das hydrostatische Getriebe (4) in Abhängigkeit von der Drehzahl des Antriebsmotors (1) veränderlicher Drehzahl durch eine von dem Antriebsmotor angetriebene Hilfspumpe (23) gespeiste hydraulische Verstelleinrichtung (22) leistunggeregelt ist,
c) dem hydrostatischen Getriebe (4) eine während des Schaltvorganges in beiden Verstellrichtungen wirksame Regeleinrichtung (10) zwecks Anpassung der Ausgangsdrehzahl des hydrostatischen Getriebes (4) an die durch die Schaltstufe bedingte Drehzahländerung zugeordnet ist,
d) die Regeleinrichtung (10) Meßeinrichtungen für die Ausgangsdrehzahl des Hydrostatischen Getriebes (4) zur Betätigung eines Regelgliedes (34) aufweist welches auf ein Wegeventil für einen beidseitig beaufschlagbaren Stellkolben (26) wirkt,
e) und einer Steuereinrichtung für das Schalten des Schaltgetriebes,
dadurch gekennzeichnet,
f) daß die Verstelleinrichtung (22) für die Leistungsregelung des hydrostatischen Getriebes (4) eine Drossel (32), ein Druckregelventil (33) und das Wegeventil (29) aufweist, wobei das Wegeventil ein proportional wirksames Regelventil (29) ist, an dem das Regelglied (34) angreift, und daß der Stellkolben (26) durch Federn (25) mittelzentriert ist,
g) daß die Steuereinrichtung zur Betätigung des Regelgliedes (34) eine Steuerelektronik (15) aufweist,
h) daß der Steuerelektronik automatisch gesteuerte Antriebe (9,13,14) einer Kupplung und/oder des Schaltmechanismus des Schaltgetriebes zugeordnet sind und daß i) die Steuerelektronik(15) beim Schalten des Schaltgetriebes die Ausgangsdrehzahl des hydrostatischen Getriebes (4) durch Ansteuern des Regelventiles (29) an die Eingangsdrehzahl des Schaltgetriebes anpaßt.

2. Antriebseinheit nach Anspruch 1, dadurch gekennzeichnet, daß die Steuerelektronik (15) mit die Ausgangsdrehzahl des hydrostatischen Getriebes (4) und die Eingangsdrehzahl des Schaltgetriebes (6) ermittelnde Meßeinrichtungen (19, 21) verbunden ist.

## Claims

1. Propulsive drive unit for machinery and vehicles, particularly those having units that must be driven simultaneously, preferably for construction vehicles such as wheel loaders, comprising:
a) a drive motor (1), and a transmission unit (4, 6) which can be driven by the latter and has an adjustable hydrostatic transmission (4) incorporating a pump (3) and a hydraulic motor, and a manual transmission (6) connected after said hydrostatic transmission (4);
b) the output of the hydrostatic transmission (4) being regulated, in dependence on the speed of the variable-speed drive motor (1), by a hydraulic control system (22) fed by an auxiliary pump (23) driven by the drive motor,
c) there being associated with the hydrostatic transmission (4) a controller (10) active in both directions of adjustment during the gearshift operation, for the purpose of adapting the output speed of the hydrostatic transmission (4) to the speed change dictated by the switching step,
d) for actuating a final-controlling element (34) which acts on a directional valve (29) for a servo-piston (26) on which pressure can be applied from both sides, the controller (10) incorporates devices for measuring the output speed of the hydrostatic transmission (4),
e) and a control system (i) for shifting the manual transmission,
characterised in that,
f) the control device (22) for regulating the output of the hydrostatic transmission (4) incorporates a throttle (32), a pressure control valve (33) and the directional valve (29), the directional valve being a proportionally acting final-controlling valve (29) on which the final-controlling element (34) acts, and that the servo-piston (26) is centred in the middle by springs (25),
g) the control system for actuation of the final-controlling element (34) incorporates an electronic control system (15),
h) automatically controlled drives (9, 13, 14) of a clutch and/or of the shift mechanism of the manual transmission are associated with the electronic control system, and
i) when the manual transmission is shifted, the electronic control system (15) adapts the output speed of the hydrostatic transmission (4) to the input speed of the manual transmission by activation of the final-controlling valve (29).

2. Drive unit according to claim 1, characterised in that the electronic control system (15) is connected to measuring devices (19, 21) which determine the output speed of the hydrostatic transmission (4) and the input speed of the manual transmission (6).

## Revendications

1. Dispositif d'entraînement de propulsion pour des machines et des véhicules, en particulier celles et ceux avec des groupes d'apparei Is devant être entraînés simultanément, de préférence pour des engins de chantier tels que des chargeurs sur roues, se composant de :
a) un moteur d'entraînement (1) et une unité de transmission (4, 6) entraînée par ce moteur avec une transmission hydrostatique réglable (4), présentant une pompe (3) et un moteur hydraulique et une boîte de vitesses (6) placée à la suite de celle-ci;
b) la transmission hydrostatique (4) étant réglable, en ce qui concerne la puissance, en fonction de la vitesse de rotation variable du moteur d'entraînement (1), au moyen d'un dispositif hydraulique de réglage (22) alimenté parune pompe auxiliaire (23) entraînée par le moteur d'entraînement (1);
c) à la transmission hydrostatique (4) est associé un dispositif de régulation (10) agissant dans les deux sens de réglage pendant l'opération de changement de vitesse pour adapter la vitesse de rotation à la sortie de la transmission hydrostatique (4) à la variation de la vitesse de rotation provoquée par le changement de vitesse;
d) le dispositif de régulation (10) présente des dispositifs de mesure de la vitesse de rotation à la sortie de la transmission hydrostatique (4) pour actionner un organe de régulation (34) qui agit sur une vanne de commutation (29) pour un piston de réglage (26) pouvant être sollicité des deux côtés;
e) et un dispositif de commande (15) pour le changement de vitesse de la boîte de vitesses;
caractérisé en ce que :
f) le dispositif de réglage (22) pour la régulation de la puissance de la transmission hydrostatique (4) présente un étranglement (32), une vanne régulatrice de pression (33) et la vanne de commutation (29), la vanne de commutation étant une vanne régulatrice (29) à action proportionnelle, sur laquelle agit l'organe de régulation (34), et en ce que le piston de réglage (26) est centré au milieu par des ressorts (25);
g) le dispositif de commande pour actionner l'organe de régulation (34) présente une électronique de commande (15);
h) à l'électronique de commande sont associés des entraînements (9, 13, 14) commandés automatiquement pour un embrayage et/ou pour le mécanisme de changement de rapport de la boîte de vitesses, et
i) l'électronique de commande (15) adapte, lors du changement de rapport de la boîte de vitesses, la vitesse de rotation à la sortie de la transmission hydrostatique (4) à la vitesse de rotation à l'entrée de la boîte de vitesses en commandant la vanne régulatrice de pression (29).

2. Unité d'entraînement selon la revendication 1, caractérisée en ce que l'électronique de commande (15) est reliée à des dispositifs de mesure (19, 21) mesurant la vitesse de rotation à la sortie de la transmission hydrostatique (4) et la vitesse de rotation à l'entrée de la boîte de vitesses (6).
